Europäisches Patentamt

European Patent Office

Office européen des brevets

(11) Publication number: **0 005 842**
A1

## EUROPEAN PATENT APPLICATION

(21) Application number: 79101688.4

(22) Date of filing: 31.05.79

(51) Int. Cl.²: **H 04 M 11/00**
G 06 F 15/20, H 04 Q 3/00

(30) Priority: 01.06.78 US 911670

(43) Date of publication of application:
12.12.79 Bulletin 79/25

(84) Designated Contracting States:
DE FR GB NL

(71) Applicant: Universal Industrial Control Devices Ltd.
14240-115 Avenue
Edmonton Alberta, T5M 3B7(CA)

(72) Inventor: Lumsden, James Ray
R.R. 8 Box 13 Site 7
Edmonton Alberta(CA)

(74) Representative: von Füner, Alexander, Dr. et al,
Dr. A. v. Füner;Dipl.-Ing. P. Strehl Dr. U.
Schübel-Hopf;Dipl.-Ing. D. Ebbinghaus Dr. Ing. D. Finck,
Patentanwälte Mariahilfplatz 2 & 3
D-8000 München 90(DE)

(54) High speed central office scanner.

(57) The invention relates to a high speed central office scanner for use with a plurality of transponding units connected by telephone lines. The scanner is comprised of N, I/O units (30), each comprised of a multiplexer (70) for connecting the I/O units to M telephone lines; a microprocessor (48) and multiplex logic (66) which sequentially selects one of the M telephone lines; a busy detect circuit (68) for checking the selected telephone line and providing a signal when the line is busy; a TX/RX unit (54) connected to the selected line for transmitting an instruction code to a transponder connected thereto when the signal is absent and for receiving data from the transponder in response to the instruction code; and a storage unit (58). The scanner further includes a master microprocessing unit (26), which includes a main microprocessor (34) for sequentially selecting one of the N, I/O units and for generating an interrogating code for transmission to each selected I O unit. Each master microprocessor unit includes a master storage unit (36) for storing received data from the selected I O unit and a main TX RX unit (32) for transmitting the received data stored in the main storage unit, upon receipt of a further interrogation code, wherein each of the N, I/O units scan the M telephone lines independently and asynchronously with respect to each other of the N, I/O units and the master microprocessing unit.

FIG. 2

- 1 -

# High speed central office scanner

The present invention relates to a scanner and more particularly to a high speed scanner for use in both cyclically or randomly sending to and receiving information from a transponding device connected to a telephone system.

The scanner of the present invention can be used to access a transponder of the type described in copending United States patent application Serial No. 881,791, which was filed on 27 February 1978 and is assigned to Universal Industrial Control Devices Limited. It should however be understood that the scanner of the present invention is not limited to the particular transponder identified above and may be connected to pluralities of other transponders.

The entire scanning system is controlled by a central computer which can form a part thereof. The central computer has, as its inputs, information of a special request nature from various service companies. The computer codes this information to form an information block and then sends this block to the correct scanner of the system so that the block is eventually routed to the correct subscriber's transponder. The central computer is supplied with the standard I/O hardware for use by the companies, i.e. CRT displays, printers and disc storage memories.

In another embodiment the central computer transfers the special request to a data concentrator which then codes the information into an information block for transmission to the correct master microprocessor. Data received from the subscriber's transponder via the correct master microprocessor is then decoded by the data concentrator and feed directly to the central computer via a high speed direct memory access line. This latter embodiment relieves the central computer of its load in formulating the information blocks and in addition provides a system whereby the central computer is interrupted for only a short time while receiving data from the subscriber's transponder.

As will be seen from the detailed description, each subsystem operates within the overall system on what is known as a polled basis. In other words, when one subsystem has information to be sent to another subsystem, the subsystem to receive the information is first asked whether or not it is in a condition to actually receive this information. The receiving subsystem must send a "yes" reply to the transmitting subsystem before any data can be transmitted. This is an important feature of the subsystem because it allows each subsystem, the operation of which is controlled by its own microprocessor, to cyclically operate independently of each other subsystem, except when it is necessary for two subsystems to communicate with one another. When two subsystems communicate with one another then, and only then, do the two subsystems synchronize with one another. This independent asynchronous operation of the individual subsystems allows for fast scanning and high reliability. The polling requirement of one subsystem to communicate with another, ensures that no data is lost because two or more subsystems are simultaneously attempting to communicate with some other subsystem.

The scanning system is comprised of a plurality of I/O modules. In one embodiment of the invention, one module can handle 128 incoming pairs of telephone lines connecting as many as 128 transponders. Although several transponders can be individually accessed even though they are connected to the same telephone line pair, there cannot be more than 128 transponders connected to a given I/O module. For the purposes of this discussion, it will be assumed that only one transponder is connected to each telephone line pair. The I/O modules are set out in groups of 16 and their can be up to 8 of these groups. 2048 Transponders are connected as subsystems in 8 groups to a single master microprocessor. The master microprocessor is connected, via a data set, a high speed link and another data set, to a central computer. In one of the embodiments described in detail hereinbelow, the central computer can handle up to 16 master microprocessors, each of which can handle 128 I/O modules, each of which can handle 128 transponders. As a result, a system according to the present invention can handle 262,144 transponders. Using present day technology a scanner consisting of 128 I/O modules, 1 master microprocessor, and 1 data set can be housed in 10 linear feet of 7 foot high rack. This provides a scanning unit which is much smaller than conventional scanners.

Each of the 2048 I/O modules, the 16 master microprocessors and the central computer are subsystems which operate asynchronously performing their designated duties and only synchronizing with one another when data is to be transferred. Since 2048 I/O modules are independently operating, it can be seen that high reliability exists in this portion of the system. The 16 master microprocessors can each be duplicated and the program is such in the master microprocessors that when failure of one master microprocessor takes place, the central computer can shut down the faulty master microprocessor and can activate the redundant unit. The central computer can even be parallelled. Therefore, due to the redundancy of the subsystems and the independent asynchronous operation of the subsystems, high reliability of the system is ensured.

In another embodiment a data concentrator is connected between the central computer and the series of computer terminal data sets. One advantage of the data concentrator is that it can handle many more data sets. One embodiment can, for example, handle 20 data sets which will enable a single central computer to handle 327,680 transponders.

It was mentioned above that each subsystem is controlled by its own microprocessor. As a result, each subsystem is reprogrammable and so it can been seen, especially with respect to the I/O modules, that the system is very versatile. This reprogrammable feature allows the scanner of the present invention to be adapted to accept almost any type of transponder.

Each subsystem, before breaking its connection with a subsystem to which it is sending data, checks receipt of this data with respect to security and validity and sends a "handshake" signal back to the transmitting subsystem, if and only if the data has been received correctly. At that point, and only at that point, is the link between the two subsystems broken. It can therefore been seen that a system according to one embodiment of the present invention offers a high degree of data reliability as well as a high degree of subsystem reliability.

It is important that the scanner not effect the standard impedance of the telephone line when not in use. One embodiment of the present invention provides a scanner which has an infinite DC impedance on the tip to ring lines of the telephone system. This same scanner provides greater than 20 meg-ohms AC impedance when not selected and approximately a 600 ohm AC impedance, tip to ring, when selected. These standards are well within the specifications set out by the telephone companies.

The scanner embodiment mentioned above employs a novel circuit which isolates logic ground from the central office ground, thereby providing for the use of solid state switches which are capable of withstanding over voltages on the tip and ring lines which are far in excess of the break down voltage of the switches. In conjunction with this novel circuitry, the scanner employs a busy test circuit which consumes less than 300 micro-amps when a telephone circuit is selected. Other configurations of the busy test circuit according to the present invention use virtually no power from a selected telephone circuit.

In yet another embodiment a busy detect circuit is employed which has no connection whatever to the central office ground. This embodiment has a finite DC impedance on the tip and ring lines of the telephone system, however, this impedance is very large and well within the required specifications.

In order to fully understand the operation of the scanner, it is necessary to understand the kinds of intructions that the sanner must send to the many transponders connected thereto and the kind of information that can be retrieved from the transponders. As an example of this information transfer, the transponder disclosed in the above-mentioned United States patent application Serial No. 881,791 will be described herein with respect to its receipt of instructions and its transmission of stored data. The transponder can be connected to three utilities and measures consumption of these utilities in accumulating registers. The transponder can initialize an accumulator and transmit the accumulated quantity when requested by the central computer.

The transponder also has an hourly peak demand memory which stores hourly consumption of the electric utility. This requires the transponder to keep track of the real time and date.

The transmit baud rate of the transmitter is also adjustable. The transponder can also be controlled to load shed certain "luxury" loads when demand of power is high. Finally, the transponder can be connected to fire and intrusion alarms. These alarms must be monitored on a cyclic basis.

To summarize, the following is a list of intructions received and data transmitted by and from the transponder:

Interrogate all three accumulators

Interrogate status word

Interrogate accumulators and status words

Interrogate hourly demand memory

Interrogate hourly demand memory, status word and accumulator

Reset - Accumulator 1 and retransmit

Reset - Accumulator 2 and retransmit

Reset - Accumulator 3 and retransmit

Reset - Hourly demand memory and Tx status word

Reset - Alarm register and retransmit

Load - Accumulator 1 and retransmit

Load - Accumulator 2 and retransmit

Load - Accumulator 3 and retransmit

Load - Time clock register and retransmit

Load - Customer identification code

Control 1 and retransmit status word

Control 2 and retransmit status word

Control 3 and retransmit status word

Control 4 and retransmit status word

Control 5 and retransmit status word

Baud rate - set for 150 B.

Baud rate - set for 300 B.

Baud rate - set for 600 B.

Baud rate - set for 1200 B.

Tx. control delay - set for 50 ms

Tx. control delay - set for 100 ms

Tx. control delay - set for 200 ms

Tx. control delay - set for 300 ms

Tx. control delay - set for 400 ms

Tx. control delay - set for 500 ms

Tx. control delay - set for 600 ms

Tx. control delay - set for 700 ms

Tx. control delay - set for 800 ms

Tx. control delay - set for 900 ms

Tx. control delay - set for 1000 ms

Tx. control delay - set for 1100 ms

Tx. control delay - set for 1200 ms

Tx. control delay - set for 1300 ms

Tx. control delay - set for 1400 ms

Tx. control delay - set for 1500 ms

Diagnostic RAM test pattern

The instruction list defined above can be broken down into two groups, the first group containing merely the status word and the second group containing all of the remaining instuctions.

In order to instruct the transponder or to receive data from the transponder in the second group, the central computer must initialize the action. This group is known as the special request group.. The status word is, however, different in that it includes information concerning the fire and intrusion alarms and therefore must be retrieved from the transponders on a cyclic basis. For this reason, the I/O module itself has a scanning routine under the control of an internal microprocessor which cyclically scans the transponders connected thereto retrieving status word data from the transponders. This scanning action is not controlled by the central computer, with the exception that the I/O module's scanning routine can be interrupted by the central computer to process a special request entry. Since 2048 I/O modules are simultaneously and asynchronously scanning a total of 262,144 transponders, it can be seen that each transponder is scanned much more often than would be the case if a single large scanner were employed or if a plurality of scanners were used which were synchronously controlled.

In accordance with an aspect of the invention there is provided a high speed scanner for communicating with a plurality of transponding units connected by telephone lines, said scanner comprising: N, I/O means, where N is a positive integer, each I/O means comprising: multiplex means for connecting said I/O means to M telephone lines, each telephone line being connected to at least one transponder, where M is a positive integer; a microprocessor; multiplex logic means, controlled by said microprocessor for sequentially selecting one of said M telephone lines; a busy detect means for checking said selected line and producing a signal when said selected line is busy; transmitting-receiving means connected to said selected line, controlled by said microprocessor for transmitting an instruction code to a transponder connected thereto when said signal is absent, and receiving data from said transponder in response to said instruction code; storage means; and I/O interface logic means, wherein said microprocessor analyzes the received data and enters the received data in said storage means if the received data satisfies a predetermined criterion; master microprocessor means comprising: interface logic means connected with said I/O interface logic means of each of said N, I/O means; a main microprocessor for sequentially selecting one of said N, I/O means and for generating an interrogation code for transmission to each selected I/O means to enquire if said selected I/O means has received data stored therein; main storage means for storing received data from said selected I/O means; and main transmitting-receiving means for transmitting said received data stored in said main storage upon receipt of a further interrogation code; wherein each said N, I/O means scan said M telephone lines independently and asynchronously with respect to each other of said N, I/O means and said master microprocessor means.

were employed or if a plurality of scanners were used which were synchronously controlled.

In accordance with an aspect of the invention there is provided a high speed scanner for communicating with a plurality of transponding units connected by telephone lines, said scanner comprising: N, I/O means, where N is a positive integer, each I/O means comprising: multiplex means for connecting said I/O means to M telephone lines, each telephone line being connected to at least one transponder, where M is a positive integer; a microprocessor; multiplex logic means, controlled by said microprocessor for sequentially selecting one of said M telephone lines; a busy detect means for checking said selected line and producing a signal when said selected line is busy; transmitting-receiving means connected to said selected line, controlled by said microprocessor for transmitting an instruction code to a transponder connected thereto when said signal is absent, and receiving data from said transponder in response to said instruction code; storage means; and I/O interface logic means, wherein said microprocessor analyzes the received data and enters the received data in said storage means if the received data satisfies a predetermined criterion; master microprocessor means comprising: interface logic means connected with said I/O interface logic means of each of said N, I/O means; a main microprocessor for sequentially selecting one of said N, I/O means and for generating an interrogation code for transmission to each selected I/O means to enquire if said selected I/O means has received data stored therein; main storage means for storing received data from said selected I/O means; and main transmitting-receiving means for transmitting said received data stored in said main storage means upon receipt of a further interrogation code; wherein each said N, I/O means scan said M telephone lines independently and asynchronously with respect to each other of said N, I/O means and said master microprocessor means.

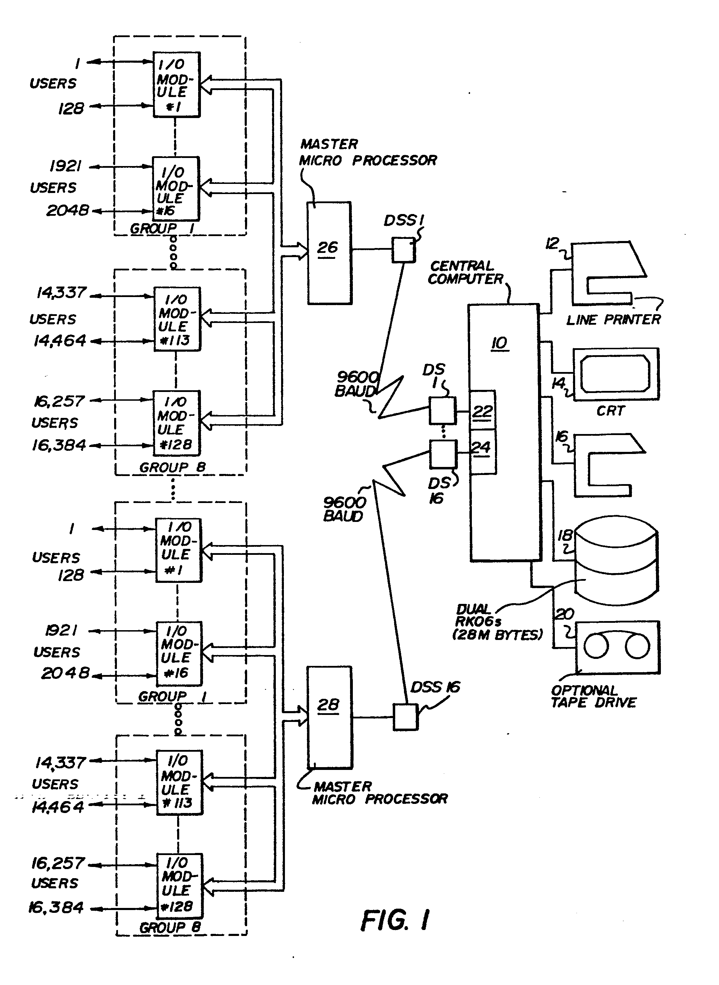

Each data set DSS1 through DSS16 is connected to a master microprocessor, two of which are shown at 26 and 28 in Figure 1.

As is shown in Figure 1, each 128 users or subscribers are connected via a telephone line to an I/O module, with 128 such modules being connected in parallel to a single master microprocessor. Since the central computer can handle 16 master microprocessors and since each master microprocessor can handle up to 128 I/O modules, the system show in Figure 1 can handle up to 262,144 subscribers. Of course, it would be impossible to shown the entire schematic diagram in Figure 1, and so middle repetitive portions have been removed.

In addition, for the sake of simplicity, 16 I/O modules have been grouped together so that one master microprocessor handles 8 such groups.

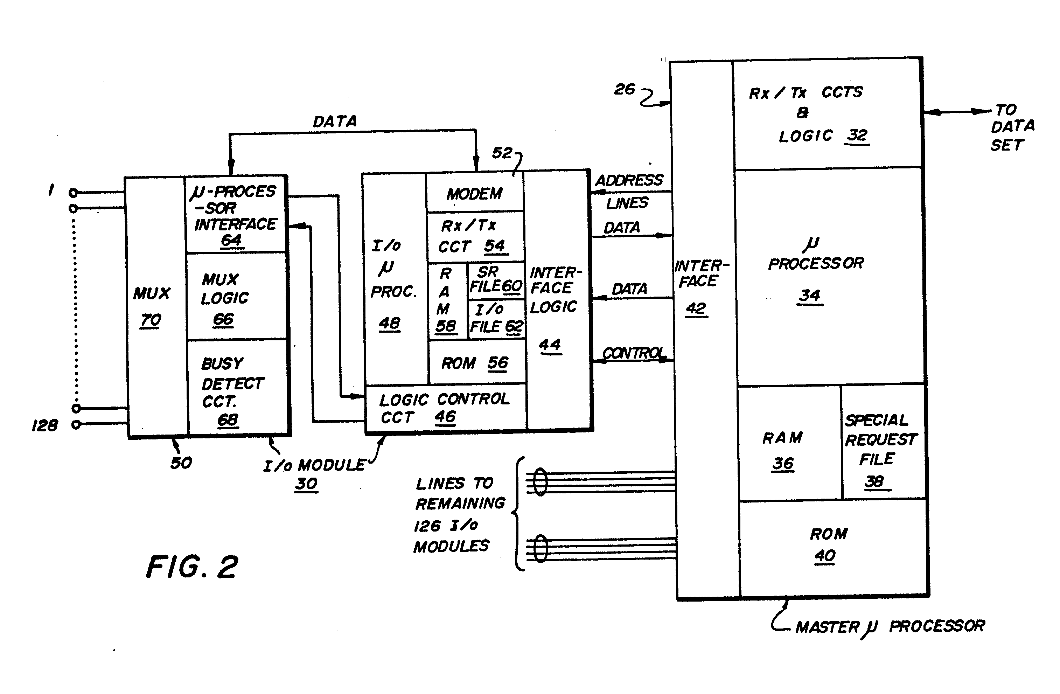

Figure 2 is a schematic diagram of a master microprocessor 26 and one I/O module 30.

The master microprocessor 26 is comprised of receive and transmit circuits and logic 32; a microprocessor 34; a random access memory (RAM) 36 containing a special request file 38; a read only memory (ROM) 40 and interface logic 42. The logic block 32 receives data from the central computer and checks both its security and validity. If validity and security of the incoming signal are correct, the input data is stored in the special request file 38 of RAM 36. Similarly, data to be transmitted from master microprocessor 26 is assembled in logic block 32 from RAM 36 prior to its transmission. Logic block 32 adds to the data to be transmitted the correct codes to satisfy security and correct parity bits and words to satisfy validity.

Data coming from the I/O modules is stored in RAM 36 prior to its transmission to the central computer.

ROM 40 contains the program which controls microprocessor 34 which, in turn, controls the various modules and sequences which take place in the master microprocessor 26.

Interface logic 42 receives data and control signals from all of the I/O modules and routes this data, upon command of microprocessor 34, to the appropriate place. It should be noted that interface logic 42 interconnects with 128 I/O modules.

A typical I/O module is shown at 30 in Figure 2. It should be remembered that the system as described herein in detail contains 2048 such modules.

I/O module 30 is comprised of interface logic 44 which interconnects the I/O module with master microprocessor 26; logic control circuit 46 which, under the control of I/O microprocessor 48, sends the appropriate logic signals to swithing input block 50 of the I/O module. The I/O module also includes a modem 52 which receives the FSK data from the transponder and converts it into a digital signal. The modem 52 also operates in the opposite direction converting digital data instructions of the I/O module into FSK instructions to be sent, via the switching block to the appropriate transponder. RX/TX circuit 54 performs the same function as block 32 in the master microprocessor 26, in that it checks security and validity of the incoming signal and prepares the correct signal to be transmitted to the transponder. The program controlling the I/O microprocessor 48 is stored in ROM 56. The I/O module also contains RAM 58 which includes special request file 60 where information to be sent to the transponder is stored and I/O file 62 wherein information to be transmitted to the master microprocessor 26 is stored.

The switch block portion 50 of the I/O module 30 is comprised of an interface 64 which feeds appropriate signals to multiplex (MUX) logic block 66 which in turn selects which switch is to be activated in order to connect the correct telephone line to the I/O module so that the correct transponder be accessed.  In addition, the interface 64 connects the data to be transmitted to the transponder to the correct telephone line once it has been selected.  Data being returned to the I/O module is routed into RAM 58 via interface 64.  The switch block 50 also checks to see if the selected line is busy and the busy information is transmitted via interface 64 from busy detect circuit 68.  The switch block 50 also includes multiplex switching network (MUX) 70.  MUX 70 contains the switches necessary to selectively connect one of the 128 telephone lines to a single I/O module.

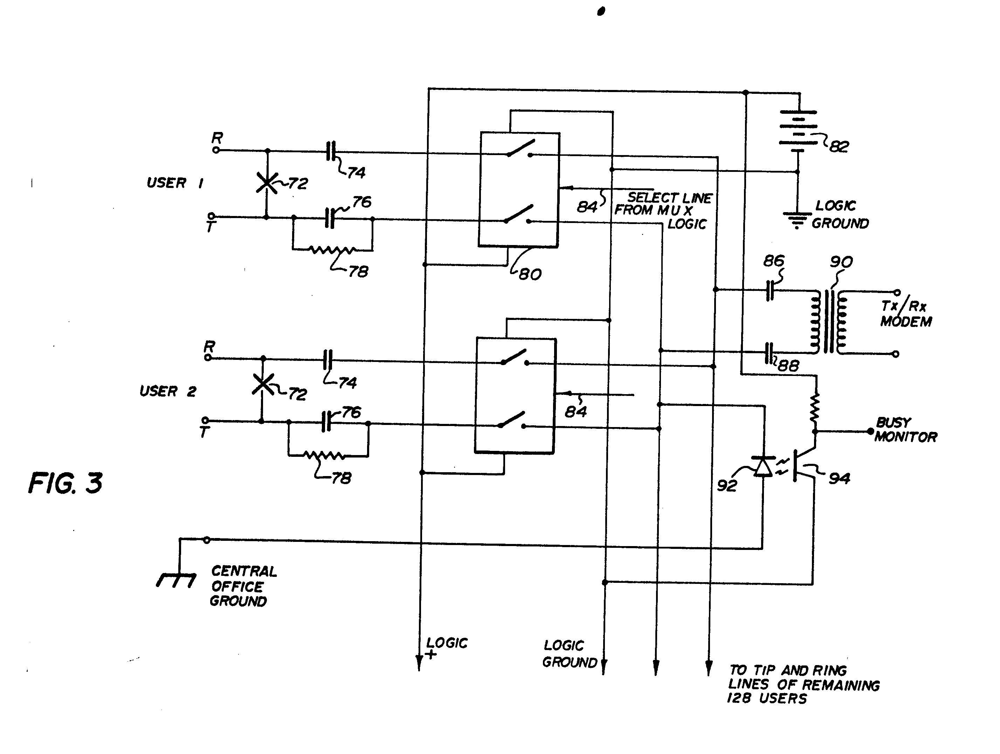

Figure 3 is a partial schematic diagram of switching block 50.  Each user is connected to the system via a tip (T) and ring (R) line.  Figure 3 shows only two user connections, however, it should be understood that each module is capable of handling 128 users.  Each T-R line has an over voltage gas discharge protection device 72 or equivalent connected thereto.  Each T-R line is isolated, in a balanced manner by capacitors 74 and 76.  The T line of each user is DC coupled to the system via resistor 78.

Electronic switch 80 is of the double-pole, single-throw type and disconnects both tip and ring lines from the remainder of the system.  Switch 80 is activated by battery 82.  It should be noted that battery 82 is connected to a different ground than the main ground of the central office.  Large over voltages can appear between the tip and ring lines and the central office ground and these voltages are isolated from the solid state switches and the logic circuitry controlling them.  As a result, it is possible for the switches and the logic circuits to handle telephone lines having high over voltages appearing thereon without being destroyed.

The switches are turned on by activation of the appropriate select line 84 controlled by MUX logic 66 shown in Figure 2.

The selected telephone line is fed to TX/RX modem 52 via a balancing network consisting of capacitors 86 and 88 and transformer 90.

When a user line is busy and is selected, there will appear a voltage between the central office ground and the T line sufficient to activate LED 92 connected thereacross. This biases phototransistor 94 to its conductive state and a logic level ground voltage appears on the busy monitor output. This signal is sent to logic control circuits 46 of Figure 2 and inhibits an instruction signal being sent via that busy line. This busy inhibit circuit can be overriden as will be explained below.

The optoelectronic switch consisting of LED 92 and phototransistor 94 completely isolates the logic voltage system from the telephone voltage system. Such a circuit draws approximately 300 micro amps from the selected telephone line. Other busy detect circuits can reduce this current draw, for example a differential amplifier connected to an optoelectronic switch would, for all practical purposes eliminate current consumption on the selected line.

Each I/O module can operate independently of the central computer and does so most of the time. Each module cyclicly scans the transponders connected thereto. The I/O module sends to each transponder the instruction to provide the I/O module with the status word. The status word information is compared with what is expected and if something is out of the ordinary, the data received from the transponder interrogated, is placed in the I/O file 62 and is then sent to the central computer the next time the master microprocessor scans that particular I/O module. Each master microprocessor can scan all 128 I/O modules in approximately 200 milliseconds. As a result, information contained in an I/O file in an I/O module will not be stored there very long before it is sent on its way to the central computer. This is critical because the status word contains information concerning the condition of the fire and intrusion alarms. If one of these alarms is set, this information must be transmitted to the appropriate authority as soon as possible.

As was mentioned above, the scanner of the present invention is reprogrammable and therefore connectable to different types of transponders. However, the status word used in the transponder according to the above-identified application will be described in detail for the sake of completeness. When a transponder is interrogated with respect to its status word, it sends 9 data words back to the I/O module. The first data word is the alert code. The second is the I.D. code of the transponder. The third is the customer I.D. code. The fourth is the baud rate at which the transponder is set and the transmit delay time of the modem enable signal. This delay time allows a transmitter to power up prior to sending data if the transponder is used in a radio link rather than in a telephone system. The fifth word contains information concerning the condition of the 8 status/alarm inputs connected to the transponder. The sixth word contains information concerning the real time clock and date to which the transponder has been set. The seventh word contains information concerning the current value of the peak demand accumulator. The remaining two words are used for data security.

It can be seen that if any of the data being returned to the I/O module from a transponder interrogated to supply the status word does not favourably compare with the pre-programmed data that should be received, it is essential that the correct authority be notified as soon as possible.

The I/O module scans only those transponders connected to users who have subscribed to a fire and intrusion alarm service. If all 128 subscribers connected to a particular I/O module subscribe to such service, the I/O module scans each user approximately every two minutes. However, it has been estimated that only approximately 30 % of the subscribers connected to a given module will request alarm checking. As a result, the scan time is reduced considerably, to approximately 30 seconds.

All other instructions sent to the transponder from the I/O module must originate as a special request at the central computer. The logic and circuit path from the central computer to a particular transponder and back to the central computer will now be described using an example of a special request. The special request will be to have printed out at the terminal end of the system the accumulated power consumption of user No. 79 connected to the fifth I/O module connected to master microprocessor 26.

All other special requests are handled in a similar manner with the exception that data returned to the computer varies with respect to its length.

The computer operator equates the name of the subscriber with what is known as a SMCT number. This number designated the particular master microprocessor scanner being used (S); the particular module being used (M); the partaicular customer being interrogated (C); and the interrogation code of the transponder on that customer's line (T). This information is placed in the central computer along with a function code, for example the function code 8, designating that it is the accumulator which is to be read. The central computer takes this information and forms an information packet. In addition to the SMCT number and the function number, the computer forms the package using a message index number, a space for a number of data words to be transmitted to the transponder, a number representing the number of data words, security checking and a bit indicating message priority. In this particular example, no data words are being sent. However, if a particular accumulator register in a particular transponder were being loaded, the data word would consist of the information to be loaded into the register of that particular transponder.

The central computer sends, through interface 22 to master microprocessor 26 the interrogation "do you have information to transmit back to the central computer?" If the answer is "yes", then the central computer requests that this information be transmitted from master microprocessor 26 to central computer 10 via data sets DSS1, DS1 and interface 22. The master microprocessor sends the information to the central computer and the central computer immediately checks the information with respect to both security and validity. If the security and validity of the transmitted data is correct, the central computer once again interrogates the master microprocessor 26 enquiring whether information is to be sent back to the central computer. This time, the master microprocessor indicates "no" and the central computer will then indicate to the master microprocessor 26 that data is to be sent thereto. The information in the data package is then sent to the master microprocessor 26. Master microprocessor upon receipt of the information stores it in RAM 58 and decodes it with respect to security and validity. If the information packet was received correctly, the master microprocessor sends a handshake back to the central computer indicating that the information was received correctly. The link is then broken between the master microprocessor and the central computer and the central computer carries out its next instruction, for example sending a special request to another master microprocessor in the system or scanning the master microprocessors to enquire if data is to be sent back to the central computer.

When the information is decoded and the handshake is sent to the central computer, the information to be transmitted onto the I/O modules is stored in the special request file 38 of master microprocessor 26. The master microprocessor program circulates, scanning the various I/O modules connected thereto. When it is completed, the next scan of the next I/O module say the Rth module, it checks its special request file to see whether any information is to be forwarded on. Since there is a special request to be sent on, i.e. to module No. 5, the master microprocessor skips to I/O module 5 and enquires whether data is to be transmitted back to the master microprocessor 26 from I/O module No. 5. If the answer is "yes" then that information is sent back to master microprocessor 26 and is checked with respect to its security and validity. If the data has been sent correctly, master microprocessor 26 then transmits the data contained in special request file 38 to I/O module 5. Upon completion of this transmission of data, the I/O microprocessor 25 checks the security and validity of the received data and sends a handshake back to master microprocessor 26 indicating that the information has been correcty received. The information is then stored in special request file 60 of the I/O module 30 which represents a typical I/O module and which represents I/O module No. 5. The master microprocessor then carries on its sequential scan going back to the (R + 1)th I/O module, i.e. the I/O module following the one it was previously scanning.

The I/O module number 5 then goes back to its normal scan of its 128 customers. After it is finished, the next customer, it checks the special request file to see if a priority bit appears therein. If no such priority bit appears, I/O module No. 5 continues its scan of its 128 customers. If the priority bit did exist, then I/O module No. 5 would process that special request by immediately accessing customer No. 79, and sending the appropriate interrogation instruction thereto. The correct data would then be transmitted back to I/O module No. 5 from subscriber No. 79's 0th transponder. The data would be checked with respect to security and validity. If the data was correct, it would be placed in I/O file 62 of I/O module 5 and the microprocessor 48 would then continue its sequential scanning of its 128 subscribers.

If no priority bit appeared in the special request file, I/O module No. 5 would finish scanning all 128 subscribers, and then go to the special request file and process the special request as in the sequence mentioned above.

If less than 128 subscribers are connected to any given I/O module, only those subscribers connected are scanned, for example, if only two subscribers were connected to an I/O module, they would be the only subscribers scanned and, as a result, the scan rate would increase considerably. This leads to other ramifications which will be discussed below.

The checked information is now contained in I/O file 62 of RAM 58 of I/O module No. 5. I/O module No. 5 raises, in its I/O file, a flag which indicates to master microprocessor 26 that it has information to be transmitted back to the master microprocessor the next time that the master microprocessor scans I/O module No. 5. When that time arises, the interrogation goes out to I/O module No. 5 from master microprocessor 26, "do you have information for me?". The flag in I/O file 62 indicates "yes" and so data contained in I/O file 62 is transmitted to the master microprocessor RAM 36 from I/O module No. 5. Once again, security and validity of the incoming data is checked. If the data is received correctly by master microprocessor 26, a handshake is sent back to I/O module No. 5 and I/O module No. 5 then carries on with its sequential scanning of the 128 customers. The correct information now is stored in RAM 36 of master microprocessor 26 and it is ready for transmission back to the central computer. The central computer sequentially scans all master microprocessors, i.e. in the system described herein, all 16. When it comes to master microprocessor 26, it sends out the interrogation "do you have any data to be transmitted to the central computer?" In this particular instance, the answer would be "yes" and master microprocessor 26 would then send the appropriate data back to the central computer. The central computer would, once again, check the data with respect to its security and validity and if all the data was received correctly, a handshake would go back to the master microprocessor 26 to send it on its scanning routine once again.

Once in the central computer, the received data is placed in an information file and this file is equated with the file originally sent. The combined information is then sent to an output device, for example, a printer.

The microprocessor unit in the I/O module contains certain standard information relating to each customer. The first portion of this information consists of I/O control function words. There are six such words. The first word is broken down into 8 bits. The first bit relates to load shed service. This bit is a 1 if the customer has requested such a service. Bit 2 is the load shed activate bit and is controlled via the central computer. Bit 3 is the alarm service bit and is a 1 if alarm service has been requested by the subscriber. Bit 4 is the alarm service customer arming bit. This bit is a 1 when the customer has armed his alarm service. Bit 5 is a busy override. If this bit is a 1, then the busy override routines take place. If this bit is a 0, the busy overrides do not take place. Bit 6 is a customer scan bit and is used by the telephone companies strictly for diagnosis. Bit 7 is an auto-peak demand load shaving service. Bit 8 defines the type of alarm that the subscriber has subscribed to, i.e. fire or intrusion or combinations of fire and intrusion.

The second word of the I/O control function words is the customer identification word and can range from the number 0 to 255. The third word is the transponder identification word and can range in number from 0 to 63. The fourth word is the transponder transmit function codes and is broken down into two 4 bit nibbles.

The first nibble represents a transmit delay for powering up a transmitter in a transponder. The second nibble represents the transmit baud rate at which the transponder was originally set. The fifth word and the sixth words are working registers and are broken up into 4 bit nibbles.

The first nibble represent the working register for the number of attempted retry passes. The second nibble represents the working register for the number of busy passes for alarm routine before override. The third nibble represents the working register for the number of detect alarm passes and the fourth nibble represents the working register for auto-peak demand load shaving. These four nibbles will be discussed in detail below in conjunction with the constant file.

The constant file pertains to the entire I/O module, as opposed to the function words which, as mentioned above, pertain to each individual customer connected to the I/O module. The data in the constant file must be downloaded to the appropriate I/O module from the central computer.

With respect to this constant file, the first byte consisting of 8 bits relates to the number of retries while on a subscriber telephone line. For example, if this number were set at 3, the I/O module would interrogate the customer's transponder three times, each time reducing the baud rate. If the I/O module still did not get a valid response from the transponder in question, it would place a 1 in the first nibble of the working register. The I/O module would then proceed to scan its 128 subscribers returning to the subscriber in question. Before interrogating the subscriber a second time, the program contained in the I/O module looks at byte 2 of the constant file to see how many retry passes can be performed before reporting an alarm condition. If, for example, byte 2 contained the number 2, then the system would interrogate the subscriber in question three more times, the number set in the first byte of the constant file. If, after this second three time attempt, no valid information was retrieved, the I/O module would prepare an alarm packet of information which would be sent to the central computer.

Byte 3 of the constant file contains the allowable peak demand consumption for load shaving. For example, the number 10 could be entered into byte 3. The number 10 would, of course, represent 10 kilowatts. The I/O module continuously scanning consumption of its 128 customers, when it found a subscriber reaching this predetermined number, would do either a load shaving or an alarm function in the subscriber's home and prepare a peak demand consumption overload information packet to be sent back to the central computer. At the end of the hour, the load shaving and the alarm system would be reset and the next hour of consumption would be monitored with respect to the predetermined number loaded into byte 3. Byte 4 is used on conjunction with the subscribers' function words and relates to the number of allowable busy passes before override as allowed during an alarm routine. For example, if the alarm service was requested in the function word, and the busy override function was set, then the system would bypass the customer a predetermined number of times, i.e. the number of times set into byte 4, before performing a busy override. If the customer arming bit were up in the function word, then the override would be immediate.

Byte 5 has a number set therein equal to the number of allowable passes when an alarm has been detected before reporting to the central computer. This function is used to eliminate many false alarms. For example, if in the subscribers' home the toast burns and the smoke detector is activated, this activation is an invalid fire alarm in the house. Byte 5 can be set so that such a mild problem can be corrected with in the house by the subscriber before a valid alarm is transmitted back to the central computer.

Bytes 6, 7, 8 and 9 relate to the real time day and real time clock and are used to synchronize the transponder, a function necessary in storing peak demand information.

Returning now to the function word, if for example, a subscriber subscribes to load shed service, then the first bit in the first function word is set to a "1". The central computer then sets the second bit. These two bits are "ANDED" and if the result is a "1", load shedding takes place. Once the load shedding function has been validly acknowledged, the second bit returns to a "0" and the load shed is maintained until such time as the load shed is to be removed at which time the second bit will become a "1", "ANDED" with the first bit to activate the load shed relays in accordance with the data contained in the special request file. This format allows the load shed and the alarm service to be operated simultaneously.

The sixth bit scans the customer and is used by the telephone company for looking at its telephone cables. If this bit is a "1", then all telephone subscribers are scanned. If alarms return on these subscribers, the telephone company's computer can quickly equate alarms with bad telephone lines and/or broken cables.

As was mentioned above, when fewer than 128 subscribers are connected to any given I/O module, it is necessary to make changes in the alarm reporting times because of the increased scanning rate, in for example, the alarm systems of the I/O module. Various bits relating the alarm mechanisms in the constant file must be increased due to the increase scan rate so that the same period of time elapses before valid alarms are sent to the central computer. As a result, each I/O module can be tailored depending on the number of subscribers connected thereto. It should be noted that this is not possible with existing prior art systems.

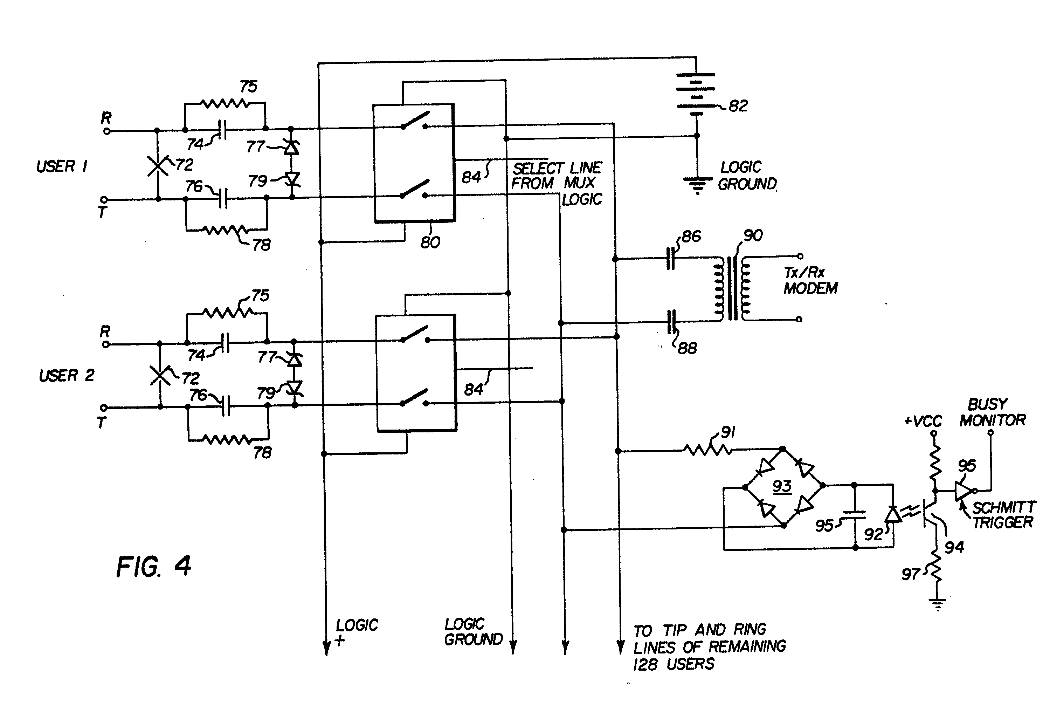

Figure 4 illustrates another embodiment of the input circuitry to a particular I/O module and in particular another embodiment of a busy detect circuit 68 shown in Figure 2. In this embodiment it is not necessary to connect any part of the tip and ring circuitry to the central office ground and therefore the tip and ring lines are completely floating. Resistor 75 which is in the order of 75K ohms is placed across capacitor 74, thereby loosely DC coupling switch 80 to the tip and ring lines of the telephone system. High speed zener diodes 77 and 79 are connected across the tip and ring lines to clip any signals appearing across the lines at approximately 7 volts. The DC voltage on the tip and ring lines passes through both sides of switch 80 and interfaces with the busy detect circuit through resistor 91 which is approximately 10K ohms. The signal is then passed through a full wave bridge rectifier 93 and capacitor 95. The busy detect circuit is therefore sensitive to the DC voltage across the tip and ring lines and the bridge rectifier 93 makes the diode 92 immune to the polarity of the DC voltage applied to the tip and ring lines. The DC voltage on the tip and ring lines produces a current through photodiode 92. When the voltage across the tip and ring lines is approximately 48 volts the telephone line is in a "not-busy" state. This voltage produces a current through diode 92 which is sufficient to turn on photosensitive transistor 94 which, in turn lowers the voltage at the input to Schmitt trigger 95, which produces a high logic level voltage at its output. If the telephone line becomes busy the DC voltage drops to, from a few volts, to about 35 volts on the tip and ring lines. This reduced voltage is insufficient to activate diode 92 and therefore transistor 94 is turned off producing a low logic level voltage at the output of Schmitt trigger 95. Resistor 97, connected in series with phototransistor 94 forces the transistor to operate as an analog amplifier. The value of resistor 97 can be adjusted so that a particular threshold voltage across the tip and ring lines activates the Schmitt trigger 95. Typically the circuit is set to activate at a tip and ring voltage of 40.

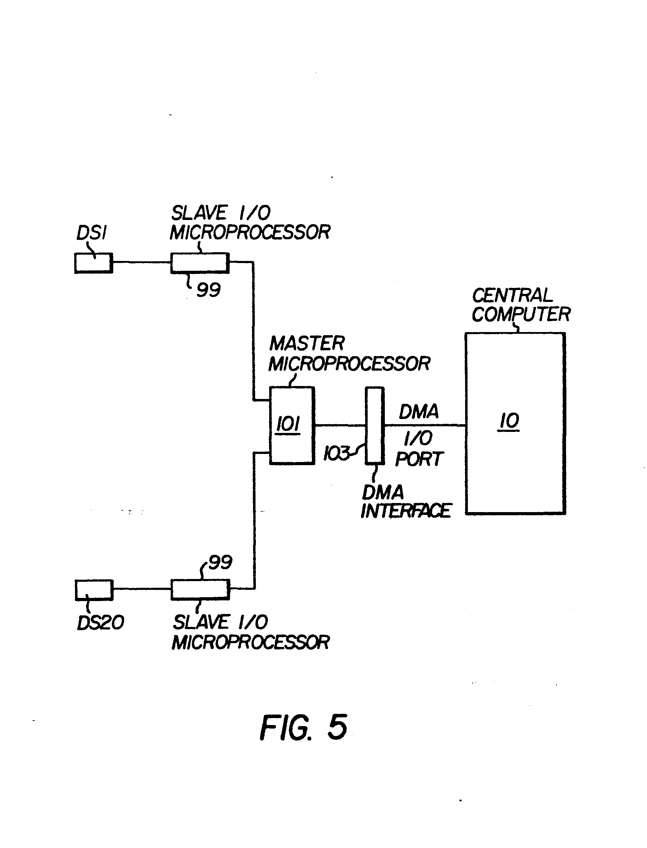

Figure 5 shows an embodiment of the system wherein a data concentrator is used to reduce the load on the central computer. The data concentrator is not a necessary addition if one is willing to use a large central computer. However, the cost savings of a data concentrator and a smaller computer far outway the cost of the larger central computer. Additional advantages are also obtained since the central computer 10 is connected to the data concentrator by a very high-speed direct memory access port. As a result, information from the transponders can be feed into the central computer 10 rapidly, thereby interrupting the central computer for very short periods of time. The formation of the information block and the error checking of the signal from the various transponders is carried out by the data concentrator. With this system it is also possible to increase the number of data sets DS connected to the central computer 10 and therefore the number of transponders in service, without increasing the size of the central computer. The embodiment shown in Figure 5 has been illustrated as handling 20 data sets and therefore 327,680 transponders, however, it should be understood that the present invention is not limited to this number. Each data set DS is conncted to a slave I/O microprocessor 99. This slave microprocessor 99 can be the same as that employed in the I/O module 30 in Figure 2 located in the scanning unit itself. Each slave microprocessor is programmed to formulate the appropriate information block for transmission to the master microprocessor and for verifying the quality of signals received from the master microprocessor. Each slave microprocessor 99 is polled as all other units in the system and only transmits when told that the receiver is available to receive. Each slave microprocessor 99 is connected to a master microprocessor 101 which receives data from the slave microprocessors and, on a polled basis, transmits to the central computer 10. Special requests from the central computer 10 are handled by master microprocessor 101 and fed to the appropriate slave microprocessor 99 for transmission to the appropriate transponder. The master microprocessor can be the same as the unit 26 shown in Figure 2. The central computer 10 and the master microprocessor 101 are interconnected via a direct memory access interface 103.

The terms "security" and "validity" checking of the signal have been mentioned. Security relates to the data errors that are produced during transmission. To check security is to check that no bits in the data of the returning signal have been changed. This is done by using parity and other cyclic redundancy techniques. The validity portion of the check makes sure that the correct transponder has been accessed. Since the security and validity checks follow from the transponder to the I/O module and to the master microprocessor and the central computer, the signal is not only checked at the transponder but at each transfer stage within the entire system.

The system can consist of a plurality of I/O modules connected to a single master microprocessor. If the system is reduced to this size a central computer is not

0005842

necessary and appropriate I/O devices may be connected
directly to the master microprocessor.  In accordance with
the embodiment described in detail such a system of
reduced size could handle 16,384 subscribers.

Claims:

1. A high speed central office scanner for communicating with a plurality of transponding units connected by telephone lines; characterized in that said scanner is comprised of:

A. N, I/O means (30), where N is a positive integer, each I/O means comprising:

(a) multiplex means (70) for connecting said I/O means to M telephone lines, each telephone line being connected to at least one transponder, where M is a positive integer;

(b) a microprocessor (48);

(c) multiplex logic means (66), controlled by said microprocessor (48) for sequentially selecting one of said M telephone lines;

(d) a busy detect means (68) for checking said selected line and producing a signal when said selected line is busy;

(e) transmitting-receiving means (54) connected to said selected line, controlled by said microprocessor (48) for transmitting an instruction code to a transponder connected thereto when said signal is absent, and receiving data from said transponder in response to said instruction code;

(f) storage means (58); and

(g) I/O interface logic means (44),

wherein said microprocessor (48) analyzes the received data and enters the received data in said storage means (58) if the received data satisfies a predetermined criterion;

B. master microprocessor means (26) comprising:

(a) interface logic means (42) connected with said I/O interface logic means (44) of each of said N, I/O means;

(b) a main microprocessor (34) for sequentially selecting one of said N, I/O means (30) and for generating an interrogation code for transmission to each selected I/O means (30) to enquire if said selected I/O means (30) has received data stored therein;

(c) main storage means (36) for storing received data from said selected I/O means (30); and

(d) main transmitting-receiving means (32) for transmitting said received data stored in said main storage means (36) upon receipt of a further interrogation code;

wherein each said N, I/O means (30) scan said M telephone lines independently and asynchronously with respect to each other of said N, I/O means (30) and said master microprocessor means (26).

2. The scanner according to claim 1, further characterized in that it includes a central computer (10) connected to P, said master microprocessing means (26) so that the scanner now contains NP, I/O means (30) scanning MNP telephone lines, where P is a positive integer; said central computer (10) sequentially selecting each of said P master microprocessor means (26), said central computer (10) generating said further interrogation code and receiving the received data transmitted from said selected master microprocessing means (26).

3. The scanner according to claim 2 further characterized in that a data concentrator is connected between said central computer (10) and said P master microprocessors (26), said data concentrator being connected to a direct memory access port of said central computer (10), said data concentrator comprising a direct memory access interface (103) connecting said direct memory access port and a data concentrator master microprocessor (101), said data concentrator master microprocessor (101) being connected to P data concentrator slave microprocessors (99) each of which is connected in a one-to-one correspondence with said P master microprocessors (26), wherein said data concentrator sequentially selects each of said P master microprocessor means (26) and generates said further interrogation code and receives data transmitted from said selected master microprocessor means (26) for transmitting to said central computer (10).

4. The scanner according to claim 3, further characterized in that said central computer (10) can generate and transmit to a selected master microprocessing means (26) a special request code to request that a particular transponder return particular data to said central computer (10).

5. The scanner according to claim 4, further characterized in that said special request code includes a routing code identifying:

   (a)  which of said P master microprocessing means (26) to select;
   (b)  which of said N, I/O means (30) to select;
   (c)  which of said M telephone lines to select; and
   (d)  which transponder on said telephone line to interrogate.

6. The scanner according to claim 5, further characterized in that said special request code is transmitted to said selected master microprocessing means (26) only after said selected master microprocessing means (26) has transmitted the received data, if any, to said central computer (10), and wherein said main storage means (36) includes a special request portion (38) for storing said special request code.

7. The scanner according to claim 6, further characterized in that said main microprocessor (34) of said selected master microprocessor means (26) selects the correct one of said N, I/O means (30), based on said routing code, and transmits said special request code to said selected I/O means (30) only after said selected I/O means (30) has transmitted the received data, if any, to said selected master microprocessing means (26), and wherein said storage means (58) includes a special request portion (60) for storing said special request code.

8. The scanner according to claim 7, further characterized in that said special request code also includes a priority code and wherein each of said I/O means (30) includes means for detecting said priority code and for producing a priority signal in the presence of a detected code.

9. The scanner according to claim 8, further characterized in that upon receipt of said special request code, said microprocessor (48) interrupts said sequential scanning of said M telephone lines and conditions said transmitting-receiving means (54) to transmit said special request code to the appropriate transponder in the presence of said priority signal.

10. The scanner according to claim 8, further characterized in that upon receipt of said special request code, said microprocessor (48) continues sequentially scanning said M telephone lines until all M lines have been scanned and then conditions said transmitting-receiving means (54) to transmit said special request code to the appropriate transponder in the absence of said priority signal.

11. The scanner according to claim 3, further characterized in that said P master microprocessor means (26) are connected to said central computer (10) via P high speed links, each of said P high speed links includes a first data set (DSS) located adjacent said master microprocessing means (26) for converting digital data stored in said main storage means (36) for transmission to said central computer (10) into FSK signals and for converting FSK signals from said central computer (10) into digital data for use by said master microprocessing means (26), and a second data set (DS) located adjacent

0005842

- 5 -

said central computer (10) for converting digital data
produced by said central computer (10) into FSK signals
for transmission to said first data set (DSS) and for
converting FSK signals transmitted by said first data set
(DSS) into digital data for use by said central computer
(10).

12. The scanner according to claim 1, further
characterized in that said multiplex means (70) includes a
double-pole, single-throw solid state switch (80)
associated with each of said M telephone lines for
selectively connecting said telephone lines to said
scanner.

13. The scanner according to claim 12, further
characterized in that each said switch (80) is activated
by a select signal produced by said microprocessor (48)
and wherein each said switch (80) is operated by a power
supply (82) having one of its polarities connected to a
logic ground; wherein each of said M telephone lines is
comprised of a tip line (T) and a ring line (R); wherein
said tip line (T) is terminated to a central office
ground, via a portion of said busy detect means (68), and
wherein said logic ground is isolated from said central
office ground so that voltages appearing across said tip
and ring lines (T, R) and between said central office
ground and said tip and ring lines (T, R) can exceed the
break down voltage of said switch (80).

14. The scanner according to claim 13, further
characterized in that said busy detect means (68) includes
a light emitting diode (LED) (92) connected between said
tip line (T) of said selected telephone line and said
central office ground, said LED (92) being forward biased
only by a voltage appearing between said tip line (T) and
said central office ground when said selected telephone
line is in use, and a phototransistor (94) located
directly adjacent said light emitting diode (92), said
phototransistor (94) being biased into a conductive state
as a result of the forward biasing of said LED (92).

15. The scanner according to claim 12, further characterized in that each said switch (80) is activated by a select signal produced by said microprocessor (48) and wherein each said switch (80) is operated by a power supply (82) having one of its polarities connected to a logic ground; wherein each of said M telephone lines is comprised of a tip and a ring line (T, R) wherein said tip and ring lines (T, R) are isolated from a central office ground; and wherein said busy detect means (68) is DC connected across the tip and ring lines (T, R) of said selected telephone line, said busy detect means (68) comprising full wave bridge rectifier means (93) connected to said selected tip and ring lines via a resistor means (91), a light emitting diode (92) connected across said rectifying means (93); a phototransistor (94) connected as an analog amplifier the output of which is connected to a Schmitt trigger means (95), said analog amplifier being biased to produce a signal at the output of said Schmitt trigger means (95) when the DC voltage across said selected tip and ring lines drops below a predetermined DC voltage thereby indicating a busy condition on said selected telephone line.

FIG. I

FIG. 2

FIG. 3

FIG. 4

FIG. 5

| Category | DOCUMENTS CONSIDERED TO BE RELEVANT | | CLASSIFICATION OF THE APPLICATION (Int. Cl.³) |
|---|---|---|---|
| | Citation of document with indication, where appropriate, of relevant passages | Relevant to claim | |
| | GB - A - 1 402 987 (KENT)<br><br>* Page 1, lines 10-31; page 1, line 63 - page 2, line 4; page 2, line 64 - page 6, line 123; page 7, lines 3-15; figures 1-4 *<br><br>-- | 1,2,<br>4-11 | H 04 M 11/00<br>G 06 F 15/20<br>H 02 Q 3/00 |
| | US - A - 4 086 434 (BOCCHI)<br><br>* Column 2, line 61 - column 3, line 3; column 3, line 44 - column 11, line 36; figures 1-4 *<br><br>-- | 1 | |
| | ELEKTRONIK, vol. 26, no. 10, (1977.10)<br>Munich (DE)<br>BRENDLE "Serielle Schnittstellen für Prozesssteuerungen mit verteilter Intelligenz",<br>pages 61,62.<br><br>* Page 61, left-hand column, lines 1-20; page 61, right-hand column, line 31 - page 62, left-hand column, line 7; page 62, right-hand column, lines 7,8,27,28; figures 1,39 *<br><br>-- | 1,2,<br>14 | **TECHNICAL FIELDS SEARCHED (Int.Cl.³)**<br><br>G 06 F 15/20<br>15/46<br>15/56<br>H 04 M 11/00<br>H 04 Q |
| | COMPUTER DESIGN, vol. 16, no.3, (1977-03),<br>Concord (US)<br>HOLDERBY "Designing a microprocessor based terminal for factory data collection", pages 81-88.<br><br>* Page 81, right-hand column, lines 1-8; figure 1 * | 3 | **CATEGORY OF CITED DOCUMENTS**<br><br>X: particularly relevant<br>A: technological background<br>O: non-written disclosure<br>P: intermediate document<br>T: theory or principle underlying the invention<br>E: conflicting application<br>D: document cited in the application<br>L: citation for other reasons<br><br>&: member of the same patent family, corresponding document |

| | The present search report has been drawn up for all claims | | |
|---|---|---|---|
| Place of search<br>The Hague | Date of completion of the search<br>05-09-1979 | Examiner<br>HARRIS | |

EPO Form 1503.1 06.78